# EUROPÄISCHE PATENTSCHRIFT

(11) **EP 2 591 304 B1**
(45) Veröffentlichungstag und Bekanntmachung des Hinweises auf die Patenterteilung: **22.07.2015**
(21) Anmeldenummer: 11761266.3
(22) Anmeldetag: 20.06.2011
(51) Int. Cl.: F41A 23/20, F41H 7/00, B60R 21/13

(54) **MILITÄRISCHES FAHRZEUG MIT EINEM ÜBERROLLSCHUTZ UND VERFAHREN ZUR REDUKTION DER FAHRZEUGHÖHE EINES MILITÄRISCHEN FAHRZEUGS**
MILITARY VEHICLE HAVING A ROLLOVER PROTECTION ELEMENT AND METHOD FOR REDUCING THE VEHICLE HEIGHT OF A MILITARY VEHICLE
VÉHICULE MILITAIRE ÉQUIPÉ D'UN ARCEAU DE SÉCURITÉ ET PROCÉDÉ VISANT À RÉDUIRE LA HAUTEUR D'UN VÉHICULE MILITAIRE

(30) Priorität: 07.07.2010 DE 102010017784
(43) Veröffentlichungstag der Anmeldung: 15.05.2013
(73) Patentinhaber: Krauss-Maffei Wegmann GmbH & Co. KG, 80997 München (DE)
(72) Erfinder: GRÜNEWALD, Jens, 80997 München (DE)
(74) Vertreter: Feder Walter Ebert
(86) Internationale Anmeldenummer: PCT/DE2011/075137
(87) Internationale Veröffentlichungsnummer: WO 2012/022323

(56) Entgegenhaltungen:
- EP-A1- 0 626 551
- DE-A1- 10 323 076
- US-A- 4 667 565
- US-A1- 2010 052 273

## Beschreibung

Die Erfindung betrifft ein Fahrzeug mit einem Überrollschutz, an dem eine richtbare Waffe angeordnet ist und ein Verfahren zur Reduktion der Fahrzeughöhe eines Fahrzeugs mit einem Überrollschutz, an dem eine richtbare Waffe angeordnet ist.

An Fahrzeugen aus dem militärischen und polizeilichen Einsatzbereich sind üblicherweise Aufbauten, wie z.B. richtbare Waffen, Sensoren, Antennen, insbesondere Radar-Antennen oder Löschvorrichtungen angeordnet.

Richtbare Waffen sind üblicherweise an erhöhter Position angebracht, um einen möglichst großen Wirkungsbereich der Waffe zu ermöglichen. Insbesondere bei Fahrzeugen, die einen nach oben offenen Besatzungsraum aufweisen, ist es bekannt, eine richtbare Waffe an einem Überrollschutz, insbesondere einem Überrollbügel, anzuordnen. In diesem Fall bildet die Waffe den obersten Punkt des Fahrzeugs und vergrößert die Fahrzeughöhe im Vergleich mit einem baugleichen Fahrzeug ohne Waffe.

Um das Fahrzeug zu seinem Einsatzort transportieren zu können, ist es in vielen Fällen nötig, die Fahrzeughöhe zu reduzieren, um ein Verlademaß einzuhalten. Beispielsweise ist die maximal zulässige Höhe für den Transport in einem Hubschrauber oder Flugzeug geringer als die Höhe, die das Fahrzeug im Einsatz aufweist. Hierbei können sich die Aufbauten als störend erweisen. In diesem Zusammenhang ist es bekannt, die aus dem Fahrzeug nach oben herausstehende Waffe zu demontieren. Dazu wird die Waffe als Ganzes oder in ihre Komponenten zerlegt vom Überrollschutz abgenommen. Die Waffe oder ihre losen Komponenten müssen beim Verladen des Fahrzeugs im Fahrzeug verstaut und beim Entladen des Fahrzeugs wiederum aus dem Fahrzeug entnommen werden.

Aus der DE 103 23 076 A1 ist beispielsweise ein Fahrzeug mit einem Überrollschutz bekannt, welcher aus einer erhöhten Arbeitsposition in eine niedrigere Verladeposition abgesenkt werden kann. Aus der US 2010/052 273 A1 ist ein Fahrzeug bekannt, bei welchem ein Überrollschutz zur Reduzierung der Fahrzeughöhe abgenommen werden kann.

Beim Verladen des Fahrzeugs, insbesondere bei der Überführung des Fahrzeugs aus dem Einsatzzustand in den Transportzustand mit reduzierter Fahrzeughöhe, hat es sich als nachteilig erwiesen, dass die Demontage der Waffe zeitaufwändig ist. Während des Abnehmens der Waffe und ggf. dem Verstauen der Waffe bzw. ihrer losen Komponenten, ist die Waffe zudem nicht einsetzbar. Eine ähnliche Problematik ergibt sich beim Entladen des Fahrzeugs, beispielesweise aus einem Hubschrauber oder einem Flugzeug. In diesem Fall ist die Waffe erst nach der zeitaufwändigen Montage am Überrollschutz einsetzbar.

**Aufgabe** der Erfindung ist es daher, ein Fahrzeug der oben genannten Art anzugeben, welches schnell von einem Einsatzzustand in einen Transportzustand mit verminderter Fahrzeughöhe überführbar ist.

Diese Aufgabe wird bei einem Fahrzeug der eingangs genannten Art dadurch **gelöst**, dass der Überrollschutz zur Reduktion der Fahrzeughöhe aus einer Einsatzstellung in eine Transportstellung absenkbar ist, wobei der Überrollschutz zusammen mit der Waffe absenkbar ist und wobei die Waffe in der Transportstellung tiefer als ein höchster Punkt des Fahrzeugs liegt.

Mithilfe eines absenkbaren Überrollschutzes kann die Zeit zur Reduktion der Fahrzeughöhe verkürzt werden. Es ist nicht erforderlich, einzelne Komponenten zu demontieren und diese im Fahrzeug zu verstauen. Somit kann das, insbesondere militärische, Fahrzeug schnell von einem Einsatzzustand in einen Transpartzustand gebracht werden, in dem es eine verminderte Fahrzeughöhe aufweist. Somit kann das Fahrzeug schnell eingeladen werden. Der Überrollschutz kann dabei insbesondere als absenkbarer Überrollbügel ausgeführt sein.

Erfindungsgemäß ist der Überrollschutz zusammen mit einem Aufbau, nähmlich eine Waffe, absenkbar. Die Notwendigkeit zur Demontage des Aufbaus bzw. seiner Komponenten entfällt. Dadurch, dass keine Teile des Aufbaus, des Überrollschutzes bzw. des Fahrzeugs abgebaut werden müssen, kann das Fahrzeug sehr schnell von dem Einsatzzustand in den Transportzustand und insbesondere auch umgekehrt überführt werden. Dabei kann eine Waffe während des Absenkens eingerüstet sein. Deshalb eignet sich eine derartige Ausgestaltung besonders für die Anordnung einer Waffe am Überrollbügel.

Des Weiteren liegt der Aufbau, insbesondere die Waffe, in der Transportstellung erfindungsgemäß tiefer als ein höchster Punkt des Fahrzeugs. Dadurch, dass der Aufbau in der Transportstellung nicht den höchsten Punkt des Fahrzeugs darstellt, kann die Fahrzeughöhe vermindert werden. Im Gegensatz zu der Einsatzstellung, in der der Aufbau den höchsten Punkt des Fahrzeugs darstellen kann, kann der Aufbau in der Transportstellung innerhalb oder seitlich der Fahrzeugkontur liegen.

Als besonders vorteilhaft hat sich eine Ausführung erwiesen, bei der der Aufbau, insbesondere die Waffe, auch in der Transportstellung des Überrollschutzes einsatzbereit ist. Dadurch ist das Fahrzeug auch nach dem Absenken des Überrollschutzes in die Transportstellung wehrfähig. Beispielsweise kann die Besatzung des Fahrzeugs beim Verladen auch nach dem Absenken des Überrollschutzes in die Transportstellung noch Schüsse mit einer Waffe abgeben und sich in der Zeitspanne zwischen der Einnahme des Transportzustandes und dem tatsächlichen Verladevorgang verteidigen.

In einer weiteren konstruktiven Ausgestaltung ist der Überrollschutz um eine im Wesentlichen horizontal verlaufende Schwenkachse verschwenkbar. Dabei kann der schwenkbare Teil des Überrollschutzes in seiner Einsatzstellung sowohl zur Fahrzeugfront, zum Fahrzeugheck oder aber zur Fahrzeugseite gerichtet sein. Zur Überführung in die Transportstellung kann der Überrollschutz in eine abgesenkt Position verschwenkt werden. Insbesondere kann sich der Überrollschutz sowohl in der Transportstellung als auch in der Einsatzstellung vollständig auf der der Fahrzeugfront zugewandten Seite der Schwenkachse befinden. Die Schwenkachse kann dabei bevorzugt unterhalb der Fahrzeugoberkante in der Transportstellung angeordnet sein. Um einen geringen Schwenkwinkel und damit einen kleinen Schwenkweg zu erreichen, kann die Schwenkachse möglichst weit entfernt von dem höchsten Punkt des Aufbaus, insbesondere der Waffe, in der Einsatzstellung angeordnet sein.

Bevorzugt ist der Überrollschutz an zwei Anlenkpunkten an die Schwenkachse angelenkt. Die Anlenkpunkte können im Bereich der Kanten zwischen der Fahrzeugoberseite und den Fahrzeuglängsseiten angeordnet sein. Dadurch wird eine sichere Lagerung des Überrollbügels sowohl in der Einsatzstellung als auch in der Transportstellung ermöglicht.

In einer alternativen Ausgestaltung kann der Überrollschutz in einer im Wesentlichen vertikalen Richtung, insbesondere translatorisch, absenkbar sein. Beispielsweise kann der Überrollschutz von im Wesentlichen vertikal verlaufenden Führungselementen geführt sein.

In vorteilhafter Ausgestaltung stützt sich der Überrollschutz in der Einsatzstellung auf einem Auflager, insbesondere einem Fensterschutzbügel, ab. Der Überrollschutz kann durch das Auflager sicher in seiner Einsatzstellung gehalten werden. Bei einem als Fensterschutzbügel ausgeführten Auflager kann das Auflager als Rahmen einer durchsichtigen Scheibe, insbesondere aus Panzerglas, ausgestaltet sein.

Besonders vorteilhaft ist eine Ausgestaltung, bei der sich der Überrollschutz mit dem frei schwenkbaren Ende am Auflager abstützt. Dies ermöglicht einen großen beim Überrollen des Fahrzeugs geschützten Bereich zwischen dem Auflager und der Schwenkachse.

Bevorzugt ist das Auflager bewegbar, bevorzugt verschwenkbar, insbesondere zur Freigabe des Absenkweges des Überrollschutzes. Durch die Freigabe des Absenkweges kann sich der Überrollschutz sowohl in der Einsatzstellung als auch in der Transportstellung auf derselben Fahrzeugseite bezüglich der Schwenkachse befinden. Der Überrollschutz muss nicht über die Schwenkachse hinaus auf die andere Fahrzeugseite geschwenkt werden, um in die Transportstellung zu gelangen. Dadurch ergibt sich ein besonders kurzer Schwenkweg.

Ferner kann das Fahrzeug einen, insbesondere nach oben offenen, Besatzungsraum aufweisen. Dies ermöglicht ein schnelles Ein- und Aussteigen der Besatzungsmitglieder und erlaubt es ihnen, auf besonders einfache Weise in Interaktion mit der Fahrzeugumgebung zu treten. Zudem können Gegenstände schnell be- und entladen werden.

Alternativ kann der Besatzungsraum auch zumindest teilweise geschlossen ausgeführt sein. Dabei können am Überrollschutz Teile der Außenhaut des Besatzungsraums befestigt sein. Um den Schutz der Besatzungsmitglieder zu erhöhen, können die Außenhautteile als gepanzerte Platten ausgeführt sein. Darüber hinaus ist es möglich, dass Teile der Außenhaut lösbar mit dem Überrollbügel befestigt sind, um das Absenken des Überrollschutzes in die Transportstellung zu ermöglichen. Ferner können die Außenhautteile auch schwenkbar an dem Überrollschutz angelenkt sein.

In einer vorteilhaften Ausgestaltung befindet sich der Überrollschutz in der Transportstellung zumindest teilweise im Besatzungsraum, insbesondere am Boden abstützend. Während sich der Überrollschutz in seiner Einsatzstellung befindet, bietet der für die sich im Besatzungsraum befindlichen Gegenstände und Personen einen Verletzungsschutz. Da der Besatzungsraum im Transportzustand des Fahrzeugs in der Regel nicht durch Personen außer dem Fahrer genutzt wird und nur kurze Strecken zurückgelegt werden, kann der Überrollschutz in der Transportstellung in den Besatzungsraum abgesenkt werden. Dadurch muss kein gesonderter Raum zum Verwahren des Überrollschutzes in der Transportstellung vorgehalten werden. Ferner kann der Überrollschutz in der Transportstellung in eine, insbesondere formschlüssige, Aufnahme im Besatzungsraum eingreifen.

Bevorzugt befindet sich der Überrollschutz und/oder der Aufbau, insbesondere die Waffe, in der Transportstellung zumindest teilweise zwischen zwei Sitzen des Fahrzeugs. Dadurch können die Sitze, insbesondere der Fahrer- und Beifahrersitz, auch in der Transportstellung genutzt werden. Das Fahrzeug bleibt auch in der Transportstellung noch fahrfähig. Ferner ermöglicht eine derartige Anordnung auch eine leichte Bedienbarkeit der Waffe in der Transportstellung durch ein Besatzungsmitglied auf dem Fahrer- oder Beifahrersitz.

In einer vorteilhaften Ausgestaltung ist an dem Überrollschutz eine Ringlafette zum Tragen des Aufbaus, nähmlich eine Waffe, angeordnet. Durch die Ringlafette wird eine Drehung der Waffe um eine im Wesentlichen vertikale Achse ermöglicht. Der Wirkbereich der Waffe umfasst somit das gesamte Fahrzeugumfeld. Bevorzugt ist die Waffe zusätzlich noch in Azimut und Elevation richtbar.

In einer konstruktiven Ausgestaltung ist das Fahrzeug dadurch gekennzeichnet, dass der Aufbau, nähmlich eine Waffe, über einen schräg nach oben verlaufenden Träger mit dem Überrollschutz verbunden ist, wobei der Träger im Transportzustand im Wesentlichen in der Horizontalen liegt. In der Einsatzstellung des Überrollschutzes kann die an dem schräg nach oben verlaufenden Träger befestigte Waffe nach oben über den Überrollschutz hervorstehen. In der Transportstellung kann die Waffe hingegen im Wesentlichen nach vorne gerichtet sein. Infolgedessen kann die Waffe auch im Transportzustand mit einem eingeschränkten Wirkbereich benutzt werden.

Ferner wird die Aufgabe bei einem eingangs erwähnten Verfahren dadurch **gelöst**, dass der Überrollschutz aus einer Einsatzstellung in eine Transportstellung abgesenkt wird, wobei der Überrollschutz zusammen mit der Waffe abgesenkt wird und wobei die Waffe in der Transportstellung tiefer als ein höchster Punkt des Fahrzeugs liegt.

Durch das Absenken des Überrollschutzes kann die Zeit zur Reduktion der Fahrzeughöhe verkürzt werden. Es ist nicht erforderlich, einzelne Komponenten zu demontieren und diese im Fahrzeug zu verstauen. Somit kann das Fahrzeug schnell von einem Einsatzzustand in einen Transportzustand gebracht werden, in dem es eine verminderte Fahrzeughöhe aufweist. Somit kann das Fahrzeug schnell eingeladen werden. Der Überrollschutz kann dabei insbesondere als absenkbarer Überrollbügel ausgeführt sein.

Im Übrigen können die im Zusammenhang mit dem erfindungsgemäßen Fahrzeug beschriebenen vorteilhaften Ausgestaltungen auch beim erfindungsgemäßen Verfahren Anwendung finden.

Darüber hinaus können alle vorstehend anhand eines als richtbare Waffe ausgebildeten Aufbaus beschriebenen Ausbildungen der Erfindung auch entsprechend für andere Aufbauten angewendet werden.

Weitere Einzelheiten und Vorteile des Fahrzeugs und des Verfahrens zur Reduktion der Fahrzeughöhe werden nachfolgend anhand eines in den Zeichnungen dargestellten Ausführungsbeispiels erläutert. Darin zeigen:
- Fig. 1: in seitlicher Ansicht eine Darstellung eines Fahrzeugs im Einsatzzustand,
- Fig. 2: eine Ansicht eines Fahrzeugs im Einsatzzustand von oben,
- Fig. 3: in seitlicher Ansicht eine Darstellung des Fahrzeugs im Transportzustand,
- Fig. 4: eine perspektivische Darstellung des Fahrzeugs im Einsatzzustand und
- Fig. 5: eine perspektivische Darstellung des Fahrzeugs im Transportzustand.

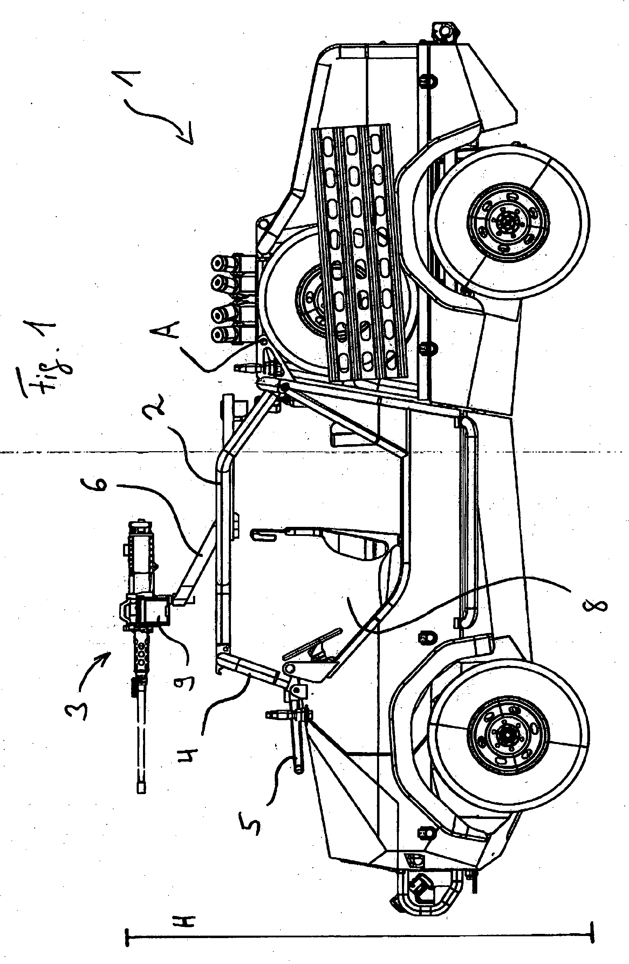

In der Fig. 1 ist ein militärisches Fahrzeug dargestellt, welches beispielsweise für die Beförderung von Spezialeinsatzkräften geeignet ist. Das Fahrzeug 1 weist einen seitlich geöffneten Besatzungsraum 8 auf, in dem Sitze 11 für die Besatzung angeordnet sind. Ferner ist der Besatzungsraum 8 auch nach oben geöffnet und wird nach oben lediglich durch einen als Überrollbügel ausgeführten Überrollschutz 2 begrenzt.

Der Überrollschutz 2 ist aus Stahlrohren aufgebaut und schützt die sich im Besatzungsraum 8 befindende Besatzung im Falle des Überschlags des Fahrzeugs 1. Ferner bietet der Überrollschutz 2 auch Schutz gegen größere von oben herabfallende Teile und kann von den Besatzungsmitgliedern als Griffhilfe beim Aufstehen aus den Sitzen 11 des Besatzungsraums 8 benutzt werden.

Der Überrollschutz 2 ist um eine im Wesentlichen horizontal verlaufende Schwenkachse A schwenkbar am Fahrzeugchassis im hinteren Bereich des Besatzungsraums 8 angelenkt. Im vorderen Bereich des Besatzungsraums 8 wird der Überrollschutz 2 an seinem frei schwenkbaren Ende auf einem Auflager abgestützt. Das Auflager ist als Fensterschutzbügel 4 ausgeführt, der schwenkbar am Fahrzeugchassis angelenkt ist. Der Fensterschutzbügel 4 besteht ebenso wie der Überrollschutz 2 aus einem Stahlrohr und umfasst zusätzlich eine Schutzscheibe aus durchsichtigem Material wie zum Beispiel Panzerglas.

Ferner umfasst das Fahrzeug 1 einen weiteren Fensterschutzbügel 5 der auf der Seite des Beifahrers angeordnet ist und mit einem Stahlrahmen eine Panzerglasscheibe umfasst. In der Darstellung in Fig. 1 ist der zweite Fensterschutzbügel 5 nach vorne auf die Motorhaube des Fahrzeugs 1 geschwenkt, um dem Beifahrer beispielsweise das Anlegen einer Sekundärwäffe 10, z.B. eines Maschinengewehrs, auf dem Fensterschutzbügel 5 nach vorne gerichtet zu ermöglichen.

An dem Überrollschutz 2 ist ein Aufbau angeordnet: An der Oberseite des Fahrzeugs 1 ist eine als Maschinengewehr ausgestaltete Waffe 3 über einen schräg nach oben verlaufenden Träger 6 mit dem Überrollschutz 2 verbunden. Diese Primär-Waffe 3 bildet den höchsten Punkt des Fahrzeugs 1 und ist somit maßgeblich für die Bestimmung der Fahrzeughöhe H. Der Überrollschutz 2 bildet somit den Träger für die Lafette der Waffe 3.

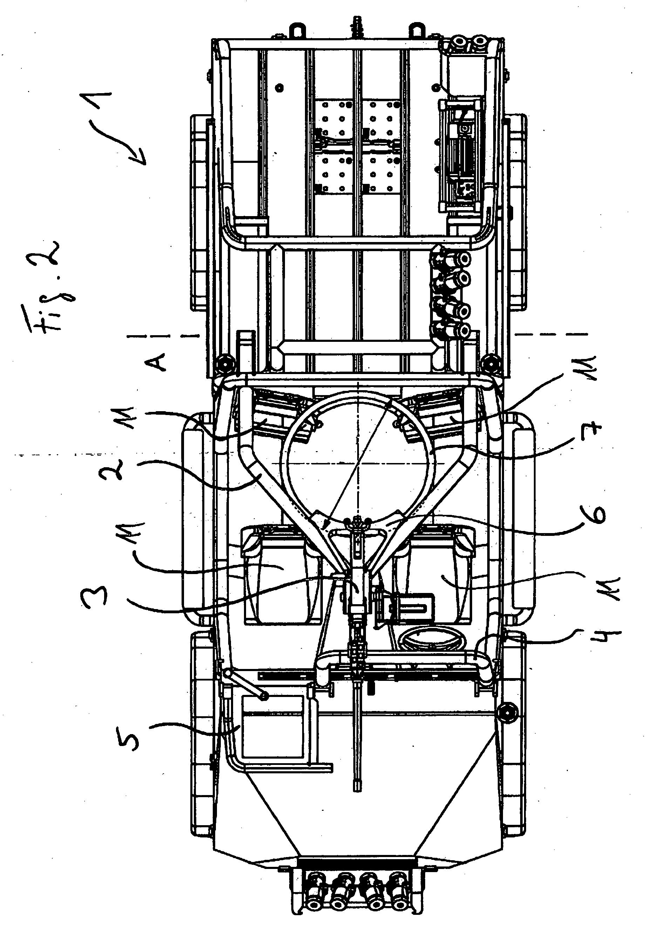

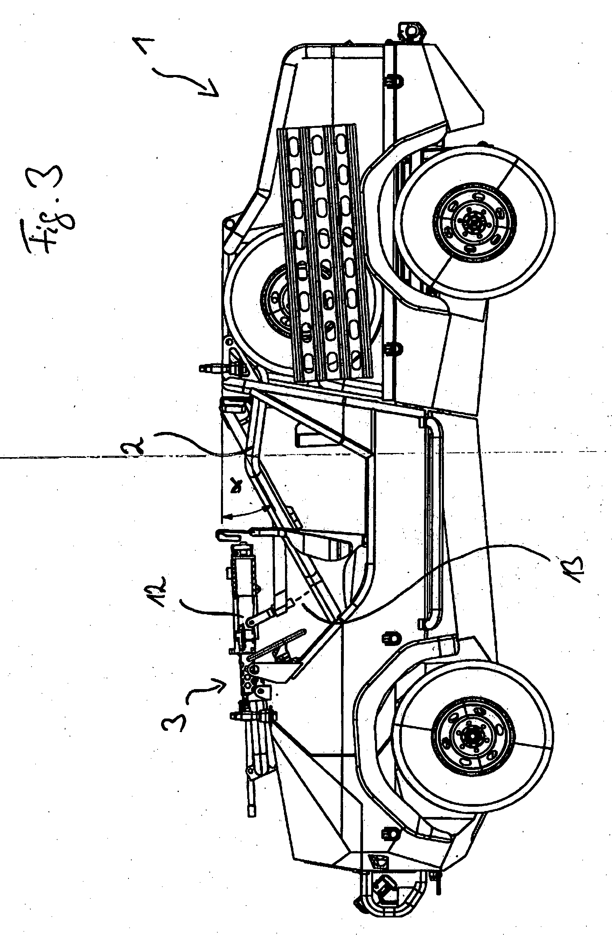

Wie in der Fig. 2 dargestellt, ist an dem Überrollschutz 2 eine Ringlafette 7 angeordnet. In den Ring der Ringlafette 7 greift der mit der Waffe 3 verbundene Träger 6 ein. Mithilfe der Ringlafette 7 ist die Waffe 3 in alle Richtungen der Fahrzeugumgebung in Azimut ausrichtbar. Um eine große Flexibiltät bei der Ausrichtung der Waffe 3 zu ermöglichen, ist die Waffe 3 zudem um zwei weitere, im Wesentlichen horizontale und vertikale Schwenkachsen 12, 13 (Fig. 3) verschwenkbar.

Zum Verladen des Fahrzeugs 1 in einem Hubschrauber oder einem Flugzeug, dessen Laderaum eine beschränkte Höhe aufweist, kann das Fahrzeug 1 in einen in Fig. 3 dargestellten Transportzustand überführt werden. Dazu kann der Überrollschutz aus der in der Fig. 1 dargestellten Einsatzstellung zusammen mit der eingerüsteten Waffe 3 in die in Fig. 3 dargestellte Transportstellung abgesenkt werden.

Damit der Überrollschutz 2 zur Reduktion der Fahrzeughöhe H aus seiner Einssatzstellung in die Transportstellung abgesenkt werden kann, muss zuerst der als Auflager dienende Fensterschutzbügel 4 nach vorne auf die Motorhaube des Fahrzeugs 1 geschwenkt werden. Dadurch gibt der Fensterschutzbügel 4 den Absenkweg des Überrollschutzes 2 frei und ermöglicht somit erst das Absenken des Überrollschutzes 2.

Wie aus der Fig. 3 ersichtlich, stellt die Waffe 3 in der Transportstellung im Gegensatz zu der Einsatzstellung nicht mehr den höchsten Punkt des Fahrzeugs 1 dar. Vielmehr liegt die Waffe 3 in der Transportstellung tiefer als der höchste Punkt des Fahrzeugs. Die Waffe 3 ist auch in der Transportstellung des Überrollschutzes 2 einsatzbereit und kann Schüsse in einem reduzierten Wirkungsbereich abgeben.

In seiner abgesenkten Stellung schließt das obere Stahlrohr des Überrollschutzes 2 einen Winkel α mit der Horizontalen ein. Dieser Winkel α entspricht dem Winkel, dem der Träger 6 mit der Horizontalen, insbesondere der Oberseite des Überrollschutzes 2, einschließt.

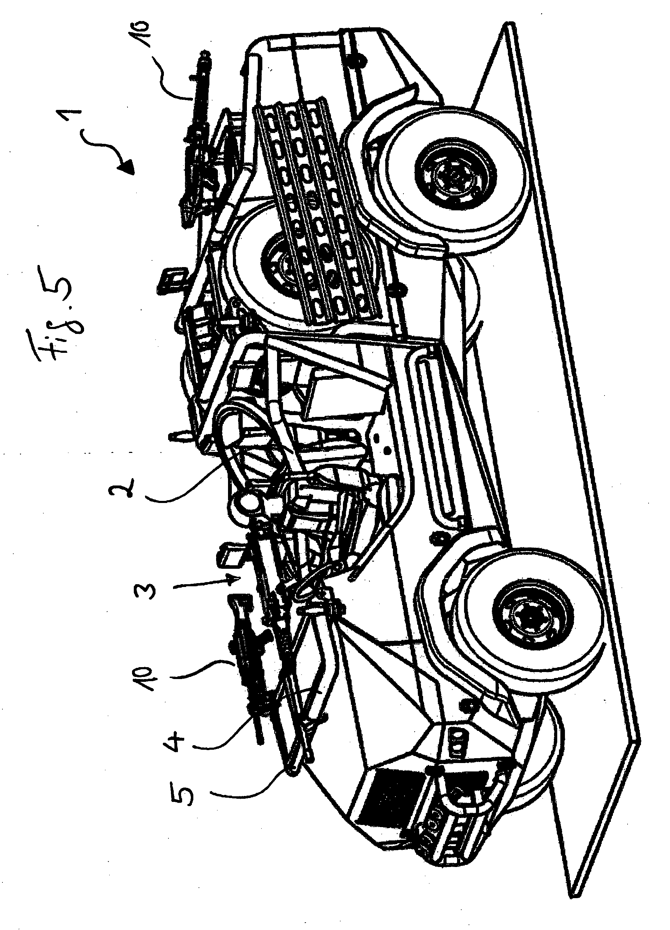

Darüber hinaus befindet sich der Überrollschutz 2 in der Transportstellung im Besatzungsraum 8 des Fahrzeugs 1 und stützt sich im Bereich des Bodens des Besatzungsraums 8 mit dem frei schwenkbaren Ende ab. Alternativ kann das frei schwenkbare Ende des Überrollschutzes 2 in einer Aufnahme im Bereich des Bodens formschlüssig aufgenommen werden. In jedem Fall ist der Überrollschutz 2 derart gestaltet, dass er sich in der Transportstellung zumindest teilweise zwischen den beiden vorderen Sitzen 11 des Fahrzeugs 1 befindet. Dadurch kann der Fahrersitz auch in der Transportstellung des Überrollschutzes 2 benutzt werden und somit das Fahrzeug im Transportzustand bewegt wird, vgl. Fig. 5. Dadurch, dass sich auch die Waffe 3 in der Transportstellung zumindest teilweise zwischen den beiden vorderen Sitzen des Fahrzeugs befindet, kann die Waffe 3 auch in der Transportstellung einfach bedient werden.

Der Überrollschutz 2 gliedert sich in drei Abschnitte, die jeweils die Form eines Rohrs aufweisen, vgl. Fig. 2. Während der Überrollschutz 2 im vorderen Bereich einen im Wesentlichen geraden Abschnitt aufweist, sind die beiden hinteren Abschnitte als gekrümmte Schenkel ausgeführt, von denen die Ringlafette 7 eingefasst wird. Die schenkelförmigen Abschnitte des Überrollschutzes 2 sind an zwei Anlenkpunkten im hinteren Bereich des Besatzungsraums 8 an die Schwenkachse A angelenkt. Im vorderen Bereich stützt sich der gerade Rohrabschnitt des Überrollschutzes 2 auf das Auflager 4.

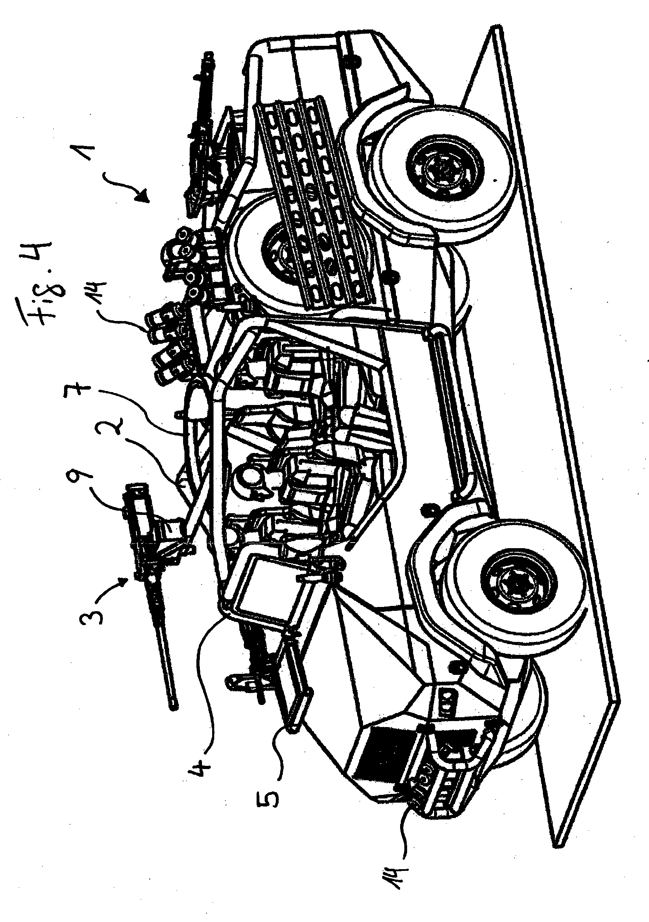

In der Fig. 4 ist das mit Wurfkörpern 14 bestückte Fahrzeug 1 im Einsatzzustand in einer perspektivischen Ansicht dargestellt. Im Besatzungsraum 8 unterhalb des Überrollschutzes 2 befinden sich drei Besatzungsmitglieder auf ihren Sitzen. Zur Bedienung der Waffe 3 kann das hintere Besatzungsmitglied aufstehen und in aufgerichteter Position in der Öffnung der Ringlafette 7 Stellung beziehen. Auf der in Schussrichtung gesehen linken Seite der Waffe 3 ist ein abnehmbares Munitionsmagazin 9 angebracht. Alternativ kann das Munitionsmagazin 9 auch auf der in Schussrichtung gesehen rechten Seite der Waffe 3 angeordnet werden. In diesem Fall kann das Munitionsmagazin 9 beim Absenken des Überrollschutzes 2 an der Waffe 3 verbleiben.

In der in Fig. 5 gezeigten perspektivischen Ansicht des Fahrzeugs 1 im Transportzustand befindet sich der Überrollbügel 2 in seiner Transportstellung. Sowohl der Überrollschutz 2 als auch die Waffe 3 sind zwischen die beiden vorderen Sitze 11 des Fahrzeugs 1 abgesenkt. In dieser Darstellung ist das Munitionsmagazin 9 von der Waffe 3 abgenommen. Ferner befindet sich ein Besatzungsmitglied auf dem Fahrersitz des Fahrzeugs 1 um das Fahrzeug 1 in ein Transportfahrzeug zu fahren.

Das beschriebene Fahrzeug 1 und das Verfahren zur Reduktion der Fahrzeughöhe H ermöglichen, dass das Fahrzeug schnell von einem Einsatzzustand in einen Transportzustand versetzt werden kann. Es ist nicht erforderlich, einzelne Komponenten zu demontieren und diese im Fahrzeug 1 zu verstauen. Somit kann das Fahrzeug 1 schnell eingeladen werden und ist zudem nach dem Ausladen schnell einsatzbereit.

In einer alternativen Ausgestaltung des Fahrzeugs 1 können am Überrollschutz 2 lösbare gepanzerte Platten angebracht sein, die die Außenhaut eines zumindest teilweise geschlossenen Besatzungsraums bilden. Ferner können die Außenhautteile auch schwenkbar an dem Überrollschutz angelenkt sein.

Anstatt der oder zusätzlich zu richtbaren Waffe kann am Überrollschutz des Fahrzeugs 1 auch ein anderes technisches Gerät als Aufbau, beispielsweise ein Sensor, eine Antenne, insbesondere eine Radar-Antenne oder eine Löschvorrichtung, angeordnet sein.

Der Überrollschutz 2 ist im Wesentlichen in der Mitte des Fährzeugs 1 angeordnet. Er stellt somit eine Versteifung nach Art einer B-Säule dar.

### Bezugszeichen:

- 1: Fahrzeug
- 2: Überrolischutz
- 3: Waffe
- 4: Fensterschutzbügel
- 5: Fensterschutzbügel
- 6: Träger
- 7: Ringlafette
- 8: Besatzungsraum
- 9: Munitionsmagazin
- 10: Sekundärwaffen
- 11: Sitze
- 12: horizontale Schwenkachse
- 13: vertikale Schwenkachse
- 14: Wurfkörper

- A: Schwenkachse
- H: Fahrzeughöhe

## Patentansprüche

1. Fahrzeug mit einer richtbaren Waffe (3) und einem Überrollschutz (2), an dem die richtbare Waffe (3) angeordnet ist,
wobei der Überrollschutz (2) zur Reduktion der Fahrzeughöhe (H) aus einer Einsatzstellung in eine Transportstellung absenkbar ist,
**dadurch gekennzeichnet, dass** der Überrollschutz (2) zusammen mit der Waffe (3) absenkbar ist und dass die Waffe (3) in der Transportstellung tiefer als ein höchster Punkt des Fahrzeugs (1) liegt.

2. Fahrzeug nach Anspruch 1, **dadurch gekennzeichnet, dass** die Waffe (3) auch in der Transportstellung des Überrollschutzes (2) einsatzbereit ist.

3. Fahrzeug nach einem der vorhergehenden Ansprüche, **dadurch gekennzeichnet, dass** der Überrollschutz (2) um eine im Wesentlichen horizontal verlaufende Schwenkachse (A) verschwenkbar ist.

4. Fahrzeug nach Anspruch 3, **dadurch gekennzeichnet, dass** der Überrollschutz (2) an zwei Anlenkpunkten an die Schwenkachse (A) angelenkt ist.

5. Fahrzeug nach einem der vorhergehenden Ansprüche, **dadurch gekennzeichnet, dass** sich der Überrollschutz (2) in der Einsatzstellung auf einem Auflager (4), insbesondere einem Fensterschutzbügel (4), abstützt.

6. Fahrzeug nach Anspruch 5, **dadurch gekennzeichnet, dass** sich der Überrollschutz (2) mit dem frei schwenkbaren Ende am Auflager (4) abstützt.

7. Fahrzeug nach Anspruch 5 oder 6, **dadurch gekennzeichnet, dass** das Auflager (4) bewegbar ist, insbesondere zur Freigabe des Absenkweges des Überrollschutzes (2).

8. Fahrzeug nach einem der vorhergehenden Ansprüche, **dadurch gekennzeichnet, dass** das Fahrzeug einen, insbesondere nach oben offenen, Besatzungsraum (8) aufweist.

9. Fahrzeug nach Anspruch 8, **dadurch gekennzeichnet, dass** sich der Überrollschutz (2) in der Transportstellung zumindest teilweise im Besatzungsraum (8), insbesondere am Boden abstützend, befindet.

10. Fahrzeug nach einem der vorhergehenden Ansprüche, **dadurch gekennzeichnet, dass** sich der Überrollschutz (2) und/oder die Waffe (3) in der Transportstellung zumindest teilweise zwischen zwei Sitzen des Fahrzeugs (1) befindet.

11. Fahrzeug nach einem der vorhergehenden Ansprüche, **dadurch gekennzeichnet, dass** an dem Überrollschutz (2) eine Ringlafette (7) zum Tragen der Waffe (3) angeordnet ist.

12. Fahrzeug nach einem der vorhergehenden Ansprüche, **dadurch gekennzeichnet, dass** die Waffe (3) über einen schräg nach oben verlaufenden Träger (6) mit dem Überrollschutz (2) verbunden ist, wobei der Träger (6) im Transportzustand im Wesentlichen in der Horizontalen liegt.

13. Verfahren zur Reduktion der Fahrzeughöhe eines Fahrzeugs nach einem der vorhergehenden Ansprüche, mit einem Überrollschutz (2), an dem eine richtbare Waffe (3) angeordnet ist,
wobei der Überrollschutz (2) aus einer Einsatzstellung in eine Transportstellung abgesenkt wird,
**dadurch gekennzeichnet, dass** der Überrollschutz (2) zusammen mit der Waffe (3) abgesenkt wird und dass die Waffe (3) in der Transportstellung tiefer als ein höchster Punkt des Fahrzeugs (1) liegt.

## Claims

1. Vehicle with a directable weapon (3) and rollover protection (2) on which the directable weapon (3) is placed, wherein the rollover protection (2) can be lowered from a use position into a transport position for reduction of the vehicle height (H),
**characterised in that**
the rollover protection (2) can be lowered together with the weapon (3) and in the transport position the weapon (3) is below a highest point of the vehicle (1).

2. Vehicle according to claim 1, **characterised in that** the weapon (3) is ready for use even in the transport position of the rollover protection (2).

3. Vehicle according to one of the preceding claims, **characterised in that** the rollover protection (2) is pivotable around an essentially horizontal pivot axis (A).

4. Vehicle according to claim 3, **characterised in that** the rollover protection (2) is connected at two connection points to the pivot axis (A).

5. Vehicle according to one of the preceding claims, **characterised in that** the rollover protection (2) in the use position rests on a support (4), particulary a protective window frame (4).

6. Vehicle according to claim 5, **characterised in that** the rollover protection (2) rests with the freely pivotable end on the support (4).

7. Vehicle according to claim 5 or 6, **characterised in that** the support (4) is movable, in particular for releasing the lowering range of the rollover bar (2).

8. Vehicle according to one of the preceding claims, **characterised in that** the vehicle comprises a crew area (8) that is particulary open at the top.

9. Vehicle according to claim 8, **characterised in that** the rollover protection (2) in the transport position is at least partially arranged in the crew area (8), especially resting on the floor.

10. Vehicle according to one of the preceding claims, **characterised in that** the rollover protection (2) and/or the weapon (3) in the transport position is at least partially arranged between two seats of the vehicle (1).

11. Vehicle according to one of the preceding claims, **characterised in that** the rollover protection (2) has a ring mount (7) to carry the weapon (3).

12. Vehicle according to one of the preceding claims, **characterised in that** the weapon (3) is connected with the rollover bar (2) through an obliquely upwardly extending carrier (6), **characterised in that** the carrier (6) in the transport is position essentially in the horizontal plane.

13. Method for reducing the height of a vehicle according to one of the preceding claims, with a rollover bar (2) on which a directable weapon (3) is placed, wherein the upper rollover bar (2) is lowered from a use position to a transport position,
**characterised in that**
the rollover bar (2) is lowered together with the weapon (3) and the weapon (3) in the transport position is lower than the highest point of the vehicle (1).

## Revendications

1. Véhicule avec une arme orientable (3) et une protection contre le renversement (2), sur laquelle est disposée l'arme orientable (3), la protection contre le renversement (2) étant abaissable pour la réduction de la hauteur du véhicule (H) d'une position d'utilisation à une position de transport,
**caractérisé en ce que**
la protection contre le renversement (2) est abaissable conjointement avec l'arme (3) et **en ce que** l'arme (3) se trouve dans la position de transport plus bas qu'un point le plus haut du véhicule (1).

2. Véhicule selon la revendication 1, **caractérisé en ce que** l'arme (3) est aussi prête à l'utilisation dans la position de transport de la protection contre le renversement (2).

3. Véhicule selon l'une quelconque des revendications précédentes, **caractérisé en ce que** la protection contre le renversement (2) peut être pivotée autour d'un axe de pivotement (A) s'étendant sensiblement horizontalement.

4. Véhicule selon la revendication 3, **caractérisé en ce que** la protection contre le renversement (2) est articulée au niveau de deux points d'articulation à l'axe de pivotement (A).

5. Véhicule selon l'une quelconque des revendications précédentes, **caractérisé en ce que** la protection contre le renversement (2) s'appuie dans la position d'utilisation sur un support (4), en particulier un étrier de protection de fenêtre (4).

6. Véhicule selon la revendication 5, **caractérisé en ce que** la protection contre le renversement (2) s'appuie avec l'extrémité librement pivotante contre le support (4).

7. Véhicule selon la revendication 5 ou 6, **caractérisé en ce que** le support (4) est mobile, en particulier pour la libération de la course d'abaissement de la protection contre le renversement (2).

8. Véhicule selon l'une quelconque des revendications précédentes, **caractérisé en ce que** le véhicule présente un habitacle (8) ouvert en particulier vers le haut.

9. Véhicule selon la revendication 8, **caractérisé en ce que** la protection contre le renversement (2) se trouve dans la position de transport au moins en partie dans l'habitacle (8), en particulier s'appuyant sur le fond.

10. Véhicule selon l'une quelconque des revendications précédentes, **caractérisé en ce que** la protection contre le renversement (2) et/ou l'arme (3) se trouve dans la position de transport au moins en partie entre deux sièges du véhicule (1).

11. Véhicule selon l'une quelconque des revendications précédentes, **caractérisé en ce qu'**un affût annulaire (7) destiné à porter l'arme (3) est agencé sur la protection contre le renversement (2).

12. Véhicule selon l'une quelconque des revendications précédentes, **caractérisé en ce que** l'arme (3) est reliée par un élément porteur (6) s'étendant en oblique vers le haut à la protection contre le renversement (2), l'élément porteur (6) se trouvant dans l'état de transport sensiblement à l'horizontale.

13. Procédé de réduction de la hauteur d'un véhicule selon l'une quelconque des revendications précédentes, avec une protection contre le renversement (2), sur laquelle est disposée une arme orientable (3),
la protection contre le renversement (2) étant abaissée d'une position d'utilisation à une position de transport,
**caractérisé en ce que** la protection contre le renversement (2) est abaissée conjointement avec l'arme (3) et **en ce que** l'arme (3) se trouve dans la position de transport plus bas qu'un point le plus haut du véhicule (1).
